# EUROPEAN PATENT APPLICATION

(11) **EP 3 644 011 A1**
(43) Date of publication of application: **29.04.2020**
(21) Application number: 18202821.7
(22) Date of filing: 26.10.2018
(51) Int. Cl.: G01B 21/04, G01B 11/00, G01B 11/02, G01B 11/04, G05D 1/00, G06F 17/00, G07B 17/00

(54) **PACKAGE MANAGEMENT SYSTEM AND METHOD THEREOF**

(71) Applicant: Toshiba Tec Kabushiki Kaisha, Shinagawa-ku Tokyo (JP)
(72) Inventor: Okamura, Atsushi, Tokyo, 141-8562 (JP)
(74) Representative: Hoffmann Eitle

(57) **Abstract**

In accordance with an embodiment, a package management system comprises a measurement device and an output device. The measurement device having a platform on which a package for measurement is to be placed, a camera positioned to capture an image of the package placed on the platform, a weight sensor configured to measure a weight of the package placed on the platform, and a processor configured to determine a length, a width, and a height of the package based on the captured image. The output device connected to a network and configured to output onto the network first information indicating the length, the width, and the height of the package and second information indicating the weight of the package.

## Description

### CROSS-REFERENCE TO RELATED APPLICATION

This application is based upon and claims the benefit of priority from Japanese Patent Application No. 2017-170471, filed September 5, 2017, the entire contents of which are incorporated herein by reference.

### FIELD

Embodiments described herein relate generally to a package management system.

### BACKGROUND

At the time of acceptance of delivery request for packages in a delivery company, it is necessary to measure a weight of the package with a scale, measure a sum total dimension of a length, a width and a height of the package with a tape measure to calculate a total dimension, and determine a delivery charge based on the combination of the weight, the total dimension and a delivery destination thereof. Generally, on a slip (e.g., invoice) attached to the package, the delivery charge and the total dimension which is a calculation foundation of the delivery charge are recorded.

In recent years, a package delivery system, provided with a package measuring device for measuring a size and a weight of the package, with which a client can perform measuring processes necessary for delivery of the package is known.

However, the dimensions measured at the reception of the package are only recorded on the slip after they are used to calculate the delivery charge and are not used. Particularly, as the total dimension is used to calculate the delivery charge, the respective dimensions of the length, the width and the height of the package are not recorded on the slip, and they cannot be used. Since generally the weight is not recorded on the slip, the weight cannot be used as well.

### SUMMARY OF THE INVENTION

One of the objects of the present invention is to improve prior art techniques and overcome at least some of the prior art problems as for instance above illustrated.

According to a first aspect of the invention, it is provided a package management system, comprising:
a measurement device having a platform on which a package for measurement is to be placed, a camera positioned to capture an image of the package placed on the platform, a weight sensor configured to measure a weight of the package placed on the platform, and a processor configured to determine a length, a width, and a height of the package based on the captured image; and
an output device connected to a network and configured to output onto the network first information indicating the length, the width, and the height of the package and second information indicating the weight of the package.

Optionally, in the package management system according to the first aspect of the invention, the camera is a range image camera and the image captured is a range image.

Optionally, the package management system according to the first aspect of the invention further comprises a visible light image camera positioned to capture another image to be printed or displayed, wherein the measurement device further comprises an image storage module configured to store image data of said another image at a time the length, width, and height of the package are determined, and the output device outputs onto the network the image data together with the first information and the second information.

Optionally, in the package management system according to the first aspect of the invention, the range camera and the visible light image camera are installed on a support that extends vertically away from the platform.

Optionally, the package management system according to the first aspect of the invention further comprises an electronic device connected to the output device through the network, wherein the electronic device is configured to receive the first information and the second information from the output device and display the first information and the second information.

Optionally, in the package management system according to the first aspect of the invention, the output device is configured to store the first information and the second information in association with identification code unique to the package placed on the platform, and outputs the first information and the second information in association with the identification code.

Optionally, in the package management system according to the first aspect of the invention, the measurement device is configured to determine an identification code for the package and includes a printer configured to print an invoice, which is to be attached to the package and includes the identification code.

Optionally, the package management system according to the first aspect of the invention further comprises an electronic device connected to the output device through the network, wherein the electronic device is configured to read the identification code from the invoice attached to the package and retrieve the first information and the second information associated with the identification code.

Optionally, in the package management system according to the first aspect of the invention, the electronic device is configured to confirm that weight and volume of the package are in a predetermined allowable range.

Optionally, in the package management system according to the first aspect of the invention, the electronic device is configured to confirm the weight and volume of a plurality of packages and determine a recommended stacking arrangement for the plurality of packages.

According to a second aspect of the invention, it is provided a method of managing packages, comprising:
optionally, placing a package on a platform of a measurement device (or detecting that a package has been placed on a platform of a measurement device);
capturing an image of the package placed on the platform;
measuring a weight of the package placed on the platform;
determining a length, a width, and a height of the package based on the captured image; and
outputting onto a network first information indicating the length, the width, and the height of the package and second information indicating the weight of the package.

Optionally, in the method according to the second aspect of the invention, the camera is a range image camera and the image captured is a range image.

Optionally, the method according to the second aspect of the invention further comprises capturing another image to be printed or displayed, with a visible light image camera; storing image data of said another image at a time the length, width, and height of the package are determined; and outputting onto the network the image data together with the first information and the second information.

Optionally, in the method according to the second aspect of the invention, the range camera and the visible light image camera are installed on a support that extends vertically away from the platform.

Optionally, the method according to the second aspect of the invention further comprises receiving the first information and the second information that are output; and displaying the first information and the second information.

Optionally, the method according to the second aspect of the invention further comprises storing the first information and the second information in association with identification code unique to the package placed on the platform, wherein the first information and the second information are output in association with the identification code.

Optionally, the method according to the second aspect of the invention further comprises determining an identification code for the package; printing an invoice that includes the identification code; and attaching the invoice to the package.

Optionally, the method according to the second aspect of the invention further comprises reading the identification code from the invoice attached to the package; and retrieving the first information and the second information associated with the identification code.

Optionally, the method according to the second aspect of the invention further comprises confirming that weight and volume of the package are in a predetermined allowable range.

Optionally, the method according to the second aspect of the invention further comprises confirming the weight and volume of a plurality of packages; and determining a recommended stacking arrangement for the plurality of packages.

### DESCRIPTION OF THE DRAWINGS

Fig. 1 is a block diagram illustrating a configuration of a package management system according to an embodiment;
Fig. 2 is a perspective diagram of a dimension measuring device according to the present embodiment;
Fig. 3 is a block diagram illustrating functional components of the dimension measuring device according to the present embodiment;
Fig. 4 is a block diagram illustrating a configuration of functional sections for generating dimension data;
Fig. 5 is a block diagram illustrating a configuration of a data processing apparatus according to the present embodiment;
Fig. 6 is a flowchart for depicting the operation of the data processing apparatus according to the present embodiment;
Fig. 7 is a schematic diagram of a package file showing an example of package measurement data and image data stored in the data processing apparatus according to the present embodiment;
Fig. 8 is a diagram illustrating an example of an output format using a display device according to the present embodiment;
Fig. 9 is a flowchart for depicting a package check process according to the present embodiment;
Fig. 10 is a flowchart for depicting a load check process according to the present embodiment; and
Fig. 11 is a diagram illustrating an example of a loaded state of a plurality of package.

### DETAILED DESCRIPTION

In accordance with an embodiment, a package management system comprises a measurement device and an output device. The measurement device having a platform on which a package for measurement is to be placed, a camera positioned to capture an image of the package placed on the platform, a weight sensor configured to measure a weight of the package placed on the platform, and a processor configured to determine a length, a width, and a height of the package based on the captured image. The output device connected to a network and configured to output onto the network first information indicating the length, the width, and the height of the package and second information indicating the weight of the package.

Hereinafter, an embodiment will be described with reference to the accompanying drawings.

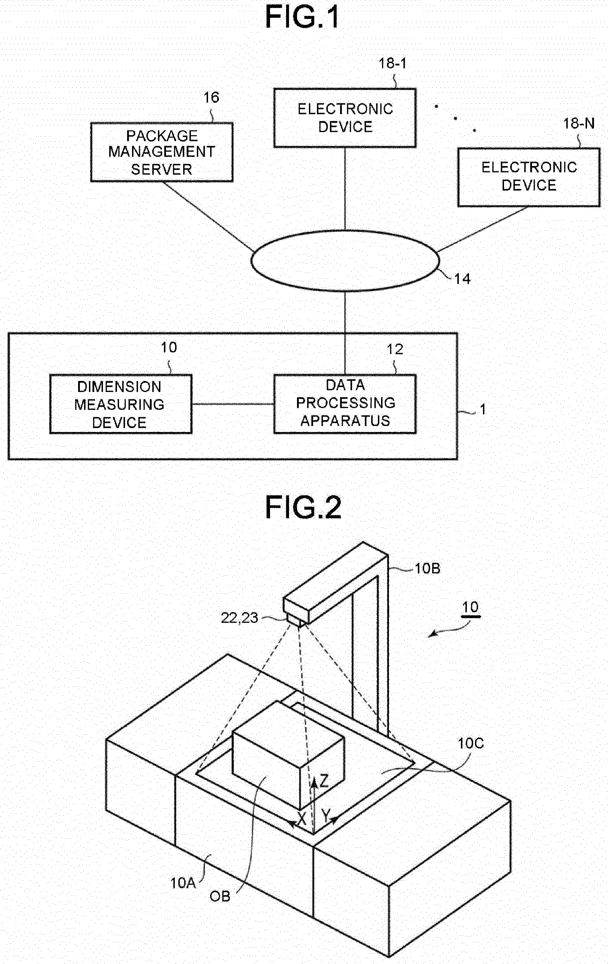

Fig. 1 is a block diagram illustrating a configuration of a package management system according to the present embodiment. The package management system includes a package reception system 1 (including a dimension measuring device 10 and a data processing apparatus 12) installed at a package reception station of a delivery company, a package management server 16 and a plurality of electronic devices 18 (18-1, ..., 18-N) connected with the package reception system 1 via a network 14 such as an Internet.

The dimension measuring device 10 has a dimension measuring function of measuring dimensions of a length, a width and a height of the package and generating dimension data indicating respective measured dimensions of the package, and a weight measuring function of measuring a weight of the package and generating weight data indicating the measured weight. The dimension measuring device 10 outputs package measurement data (including the dimension data and the weight data) to the data processing apparatus 12. The dimension measuring device 10 captures an image of the package when measuring the package, stores image data, and outputs the image data to the data processing apparatus 12 together with the package measurement data.

The data processing apparatus 12 controls the dimension measuring device 10 to measure the dimensions and the weight of the package and to store images at the time of measurement. The data processing apparatus 12 has a function of calculating the delivery charge based on information of a delivery destination of the package and the dimension data of the length, the width and the height and the weight data of the package which are measured by the dimension measuring device 10, and printing an invoice (slip). The data processing apparatus 12 has a function of outputting first information based on the dimension data indicating the length, the width and the height of the package measured by the dimension measuring device 10, and second information indicating the weight of the package based on the weight data. The data processing apparatus 12 has a function of outputting an image together with at least one of the first information and the section information based on the image data at the time of measuring the package input from the dimension measuring device 10.

As output formats of the first information, the second information and the image data, the first information, the second information and the image data may be output by being displayed on a display device arranged in the data processing apparatus 12, by being printed on a slip (e.g., invoice) or another sheet by a printing device, or by being transmitted to an external device (e.g., the package management server 16 or the electronic device 18).

The package management server 16 receives various information (sender information, delivery destination information, information relating to the package, etc.) relating to the delivery of the package from the package reception system 1 and manages the delivery of each package. In a case where a plurality of the package reception systems 1 is connected to the package management server 16, the package management server 16 receives various information from each of the plurality of the package reception systems 1. The package management server 16 stores the package measurement data and the image data transmitted from the data processing apparatus 12 in association with the package (a package code) . The package management server 16 transmits the package measurement data and the image data (or either one of them) associated with a designated package code to a request source if receiving an output request of the package measurement data and the image data (or either one of them) together with the package code.

For example, the electronic devices 18-1, ..., 18-N are used by employees of the delivery company involved in reception and delivery of the package, and may be, for example, a personal computer or a server installed in a business office for delivery or a delivery center, or may be a portable terminal possessed by a person in charge of delivery (i.e., driver). With the electronic devices 18-1, ..., 18-N, in response to a predetermined input operation, an output request for the package measurement data and the image data (or either one of them) can be transmitted to the electronic device 18 together with the package code, the package measurement data and image data stored in associated with the package code can be received from the package management server 16, and the first information (i.e., the length, the width and the height of the package), the second information (i.e., weight) and the image data can be displayed or printed.

Fig. 2 is a perspective diagram of the dimension measuring device 10 according to the present embodiment.

The dimension measuring device 10, which is installed in the package reception station of the delivery person to be used, measures the dimensions of the length, the width and the height of a package OB and the weight of the package OB to determine the delivery charge of the package.

As shown in Fig. 2, in the dimension measuring device 10, a measuring area 10C on which the package OB to be measured is placed horizontally is provided on an upper surface of a measuring table 10A. A range image camera 22 and a visible light image camera 23 supported by a support member 10B are arranged above the measuring area 10C.

The range image camera 22 photographs the package OB placed in the measuring area 10C from above to generate a range image used in a process of measuring the dimensions of the length, width, and the height of the package OB. The range image is formed by values indicating respective distances to an object from respective pixels of an image obtained by photographing the object by using the range image camera 22.

The range image captured by the range image camera 22 is represented by point group data (e.g., XYZ coordinate image) composed of positions (e.g., XYZ coordinates) of respective pixels in a XYZ coordinate space. The XYZ coordinate space is defined, for example, by an orthogonal coordinate system with an origin set at any position in a space captured by the range image camera 22 as a reference. For example, in Fig. 2, it is defined that the origin is set at a position corresponding to one angular position of the rectangular measuring area 10C, a X coordinate axis and a Y coordinate axis are parallel to sides of the measuring area 10C, and a Z coordinate axis is orthogonally upward from a placement surface of the measuring area 10C on which the package OB is placed. According to the present embodiment, for example, the length, the width, and the height of the package OB correspond to a Y coordinate axis direction, a X coordinate axis direction, and a Z coordinate axis direction of the XYZ coordinate space, respectively.

The range image camera 22 may be, for example, a stereo camera for outputting a range image based on parallax of captured images by two cameras, or a TOF (Time Of Flight) type range image camera (sensor) for measuring the distance based on time period from laser projects from the range image camera 22 toward the object until the laser reflected on the object comes back to the range image camera 22. Furthermore, the range image camera 22 may also be a camera that generates other types of range images.

The visible light image camera 23 captures an image in a range of the measuring area 10C including the package OB. The visible light image camera 23 captures an image which is generally confirmable by display or printing.

In the measuring table 10A, a weight measuring device 24 (not shown in Fig. 2) for measuring the weight of the package OB placed in the measuring area 10C is provided.

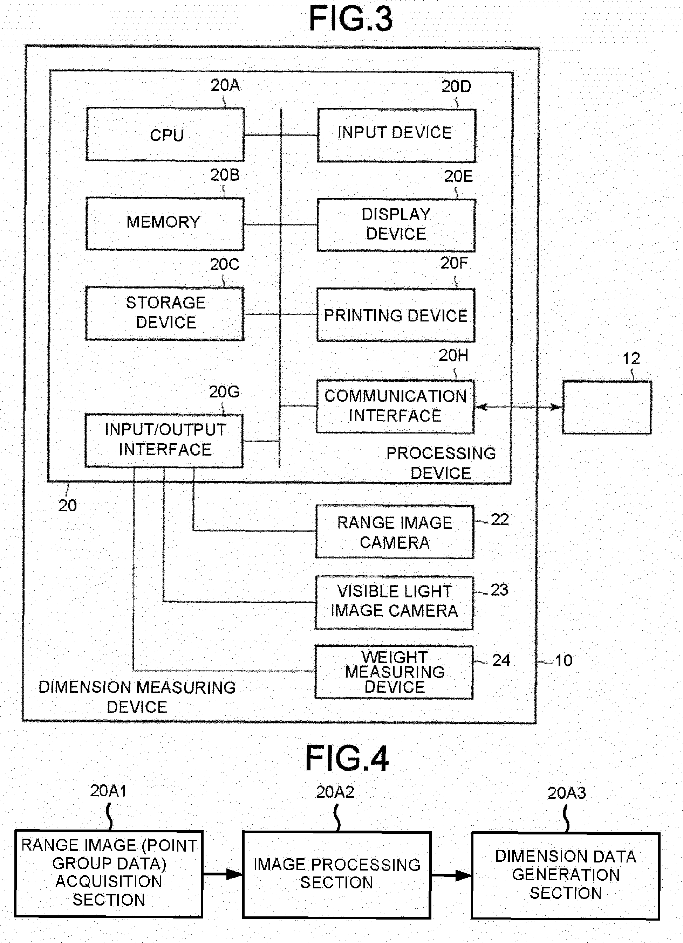

Fig. 3 is a block diagram illustrating the functional components of the dimension measuring device 10 according to the present embodiment.

As shown in Fig. 3, the dimension measuring device 10 has a processing device 20, the range image camera 22, the visible light image camera 23, and the weight measuring device 24.

The processing device 20 acquires the range image (point group data) generated by the range image camera 22 and executes a dimension measurement process for generating the dimension data indicating dimensions of the length, the width and the height of the package OB based on the range image. The processing device 20 executes a weight measurement process for generating the weight data indicating the weight measured by the weight measuring device 24. The processing device 20 executes a process of storing the image data of the image (visible image) captured by the visible light image camera 23 at the time of measuring the dimension or the weight of the package.

The processing device 20 has functions of a computer, and includes a CPU 20A, a memory 20B, a storage device 20C, an input device 20D, a display device 20E, a printing device 20F, an input/output interface 20G, and a communication interface 20H.

The CPU 20A controls the entire dimension measuring device 10 by executing a control program stored in the storage device 20C. By executing the dimension measuring program, the CPU 20A realizes functional sections for generating the dimension data shown in the block diagram in Fig. 4. As shown in Fig. 4, the function sections realized by the dimension measuring program include a range image (point group data) acquisition section 20A1, an image processing section 20A2, and a dimension data generation section 20A3.

The range image acquisition section 20A1 acquires the point group data (referred to as XYZ coordinate image in some cases) composed of positions (XYZ coordinates) of respective pixels in the XYZ coordinate space of the range image captured by the range image camera 22. Based on the range image (XYZ coordinate image), the image processing section 20A2 generates an upper surface coordinate image corresponding to a reference surface of the package OB (the upper surface of the package OB is a reference surface in the present embodiment). The image processing section 20A2 divides the range image into a X coordinate image, a Y coordinate image, and a Z coordinate image, removes coordinate points that do not correspond to the upper surface (reference surface) of the package OB for those images, and detects the upper surface coordinate image corresponding to the upper surface. The dimension data generation section 20A3 generates an upper surface 3D model based on the upper surface coordinate image to obtain a shape (i.e., approximate rectangular parallelepiped) corresponding to a rectangular parallelepiped having the upper surface indicated by the upper surface 3D model. The dimension data generation section 20A3 generates the dimension data indicating dimensions of the length, the width and the height of the approximate rectangular parallelepiped by using the approximate rectangular parallelepiped as the package OB.

In addition to each program executed by the CPU 20A, the memory 20B stores various data during execution of various processes. The storage device 20C stores various programs and data in a non-volatile storage medium (hard disk or the like) .

The input device 20D inputs an instruction for controlling an operation of the dimension measuring device 10. The input device 20D detects an input operation on a touch panel, a keyboard, a button, and the like, and notifies the CPU 20A. For example, the input device 20D is arranged near the measuring table 10A shown in Fig. 2, which is not shown, and receives an instruction for starting capturing of the package OB by the range image camera 22 and the visible light image camera 23.

Under the control of the CPU 20A, the display device 20E displays an operation state of the dimension measuring device 10, a processing result, and the like. The display device 20E is installed near the measuring table 10A, which is not shown, and presents the operation state and the processing result, to a delivery person (receptionist) who works at the measuring table 10A or a customer. The display device 20E can be used to display the measured dimensions of the length, the width and the height of the package, the measured weight of the package, and the image captured at the time of measurement for the package OB.

Under the control of the CPU 20A, the printing device 20F prints the operation state and the processing result of the dimension measuring device 10 on a predetermined sheet. The printing device 20F is installed near the measuring table 10A, which is not shown. The printing device 20F can be used to print the measured dimensions of the length, the width and the height of the package, the measured weight of the package, and the image captured at the time of measurement for the package OB.

The input/output interface 20G is connected with an external device including the range image camera 22, the visible light image camera 23 and the weight measuring device 24.

The communication interface 20H establishes communication with an external device (e.g., the data processing apparatus 12) .

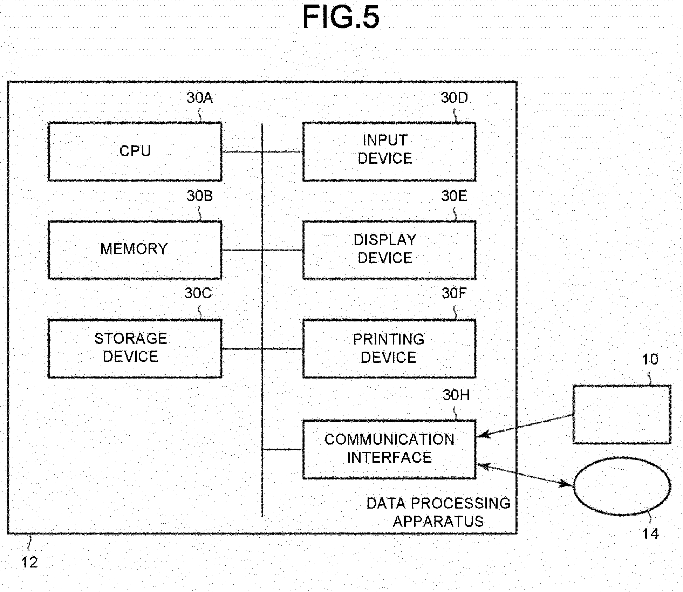

Fig. 5 is a block diagram illustrating the configuration of the data processing apparatus 12 according to the present embodiment.

The data processing apparatus 12 has functions of a computer, and includes a CPU 30A, a memory 30B, a storage device 30C, an input device 30D, a display device 30E, a printing device 30F, and a communication interface 30H.

The CPU 30A controls the entire data processing apparatus 12 by executing a control program stored in the storage device 30C. By executing the data processing program, the CPU 30A executes various processes relating to a package delivery job, controls the dimension measuring device 10, calculates the delivery charge of the package based on the dimension data and the weight data of the package OB measured in the dimension measuring device 10 and the information (i.e., invoice information) relating to the delivery destination of the package, prints the invoice, stores the dimension data, the weight data and the image data of each package OB, and controls output of the dimension data, the weight data and the image data. For example, by controlling the output of the dimension data, and the weight data and the image data, the CPU 30A executes display on the display device 30E, printing on the slip (e.g., invoice) or printing on another sheet by the printing device 30F, and transmission of the data to the external device (e.g., the package management server 16, or the electronic device 18) via the network 14.

In addition to each program executed by the CPU 30A, the memory 30B stores various data during execution of various processes. The storage device 30C stores various programs and data in a non-volatile storage medium (e.g., hard disk or the like).

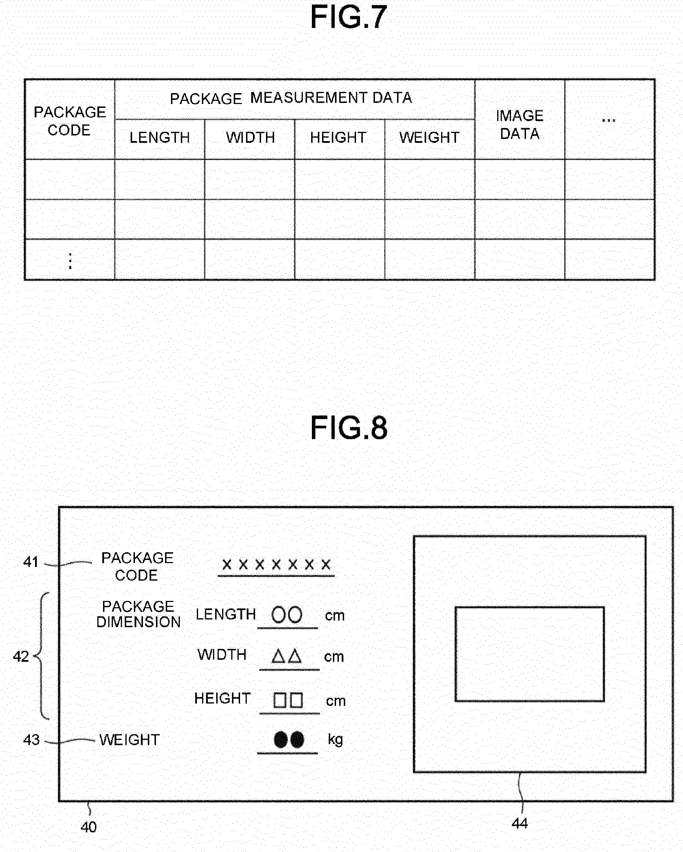

In the storage device 30C, a package file including various data relating to the package is stored (refer to Fig. 7). For example, the package file stores the length, the width, the height, and the weight of the package, and the image information of the package which are associated with the package code uniquely assigned to each package.

The input device 30D receives an instruction for controlling an operation of the data processing apparatus 12. The input device 30D detects an input operation on a touch panel, a keyboard, a button, and the like, and notifies the CPU 30A.

Under the control of the CPU 30A, the display device 30E displays an operation state and a processing result of the data processing apparatus 12.

Under the control of the CPU 30A, the printing device 30F performs printing on a slip (e.g., invoice) or another sheet.

The communication interface 30H establishes communication with the external devices (e.g., the dimension measuring device 10 and the network 14).

Next, the operation of the package management system according to the present embodiment is described.

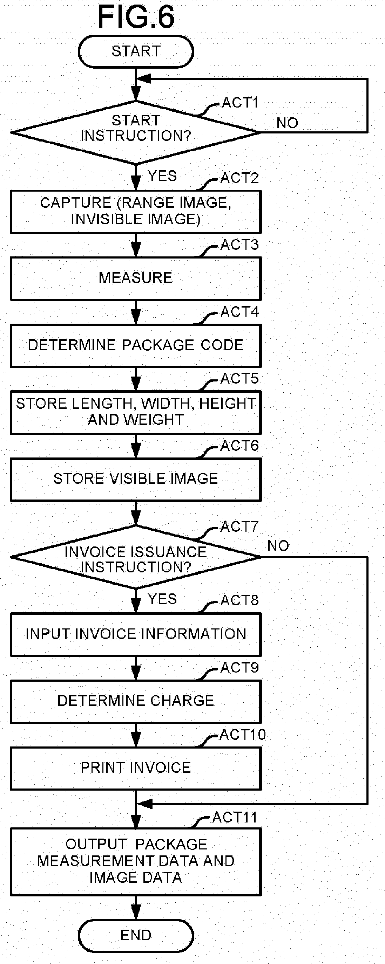

First, the operation of the data processing apparatus 12 is described with reference to the flowchart shown in Fig. 6.

If the start of measurement of the package OB placed on the measuring table 10A is instructed through the input operation on the input device 30D or the input device 20D of the dimension measuring device 10 (Yes in ACT 1), the data processing apparatus 12 enables the dimension measuring device 10 to perform the capturing and the measurement by the range image camera 22 and the visible light image camera 23 (ACT 2 and ACT 3).

The package OB is placed within the measuring area 10C provided on the upper surface of the measuring table 10A. In response to the instruction from the data processing apparatus 12, the dimension measuring device 10 executes the capturing with the range image camera 22 to generate the range image. The dimension measuring device 10 executes the capturing with the range image camera 22 to generate image data of a visible image. The dimension measuring device 10 measures the weight of the package OB with the weight measuring device 24.

The CPU 20A of the processing device 20 inputs the range image (i.e., point group data) captured by the range image camera 22, divides it into the X coordinate image, the Y coordinate image, and the Z coordinate image with the image processing section 20A2, removes coordinate points which do not correspond to the upper surface (i.e., reference surface) of the package OB for those images, and executes a process of detecting the upper surface coordinate image corresponding to the upper surface. The dimension data generation section 20A3 outputs the width data (i.e., width dimension data) , length data (i.e., length dimension data), and height data by a process based on the result of image processing by the image processing section 20A2.

With the dimension measuring device 10 according to the present embodiment, since the dimension measurement and the weight measurement are simultaneously performed for the package OB placed in the measuring area 10C, it is possible to reduce a work burden for determining the delivery charge. In the dimension measurement, since the shape of the package OB is specified and the dimension of the package OB is measured only by the range image obtained by photographing the upper surface of the package OB, it is possible to measure the dimension simply with high precision without executing the capturing a number of times by replacing the package OB or by changing the position and the angle of the package OB.

The CPU 20A of the dimension measuring device 10 outputs the dimension data indicating the respective dimensions of the length, the width, and the height of the package calculated based on the range image and the weight data of the package OB measured by the weight measuring device 24 to the data processing apparatus 12. The CPU 20A outputs the image data of the visible image to the data processing apparatus 12.

If the package measurement data, which includes the dimension data and weight data, and the image data are input from the dimension measuring device 10, the CPU 30A of the data processing apparatus 12 assigns a unique package code to the package OB measured by the dimension measuring device 10 (ACT 4). The CPU 30A stores the package measurement data, which includes the dimension data and the weight data, and the image data in the package file in the storage device 30C in association with the package code (ACT 5 and ACT 6). The dimension data indicates dimensions of the length, the width, and the height of the package OB respectively.

Fig. 7 shows an example of the package measurement data, which includes the dimension data and the weight data, and the image data in the package file stored in the storage device 30C according to the present embodiment. As shown in Fig. 7, in the package file, in association with the package code of the package to be registered, the dimension data indicating respective dimensions of the length, the width, and the height of the package measured by the dimension measuring device 10, the weight data, and the image data are stored in an associated manner.

After the measurement by the dimension measuring device 10 is completed, if issuance of the invoice (that is, slip) is instructed by the input operation to the input device 30D (Yes in ACT 7), the CPU 30A inputs invoice information necessary for recording on the invoice (ACT 8). The CPU 30A stores the invoice information in the package file of the storage device 30C in association with the package code (not shown). The invoice information includes, for example, information such as a delivery option, a delivery date and time and the like in addition to addresses of the sender and the delivery destination, a name, a phone number and the like. For example, the invoice information may be input by operating the input device 30D, or may be previously registered in association with a user code in the package management server 16 and then read out by inputting the user code with the input device 30D.

The CPU 30A calculates the delivery charge based on the total dimension of the length, the width, the height of the package indicated by the dimension data measured by the dimension measuring device 10, the weight indicated by the weight data, the delivery destination, and the delivery option (ACT 9). The CPU 30A enables the printing device 30F to print the invoice (ACT 10) . On the invoice, for example, the delivery charge, the total dimension and the like obtained from the measurement of the dimension measuring device 10 are printed together with the invoice information such as addresses of the sender and the delivery destination.

The invoice used in a delivery company generally does not print the dimensions of the length, the width and the height of the package and the weight of the package; however, such information may be printed in the present embodiment. When the printing on the invoice is performed, the length, the width and the height of the package and the weight of the package may be printed not only by numerals but also by being converted to a barcode, a two-dimensional code or the like. If they are printed by being converted to the code, they can be confirmed, for example, by using a code reading function provided in the electronic device 18.

Further, the CPU 30A outputs the package measurement data and the image data (ACT 11). As output formats of the package measurement data and the image data, the package measurement data and the image data may be output by being displayed on the display device 30E, by being printed by the printing device 30F, by being transmitted to the external device via the communication interface 30H, or the like.

Fig. 8 shows an example of an output format using the display device 30E according to the present embodiment. On the output screen 40 shown in Fig. 8, for example, numerals indicating the package code 41, the package dimension 42 (length, width, height), and the weight 43 are displayed. In the example shown in Fig. 8, a visible image 44 stored in association with the package code 41 is displayed on the same screen.

As shown in Fig. 8, since the length, the width, and the height of the package OB are respectively displayed on the output screen 40, it is easily to confirm whether the length, the width, and the height of the package OB (placed in the measuring area 10C of the dimension measuring device 10) are correctly measured.

On the output screen 40, since the visible image 44 captured when measuring the package OB is displayed, the correspondence between the package code 41, the package dimension 42, and the weight 43 and the package OB can be confirmed. Since the visible image 44 captured at the time of measurement is displayed, it can be confirmed that the package OB is measured in a correct state without being lifted or tilted at the time of the measurement. Therefore, it is possible to perform a check to avoid erroneous measurement and incorrect measurement of the package OB by the dimension measuring device 10.

On the output screen 40 shown in Fig. 8, the package dimension 42 and the like and the visible image 44 can be displayed at the same time. However, they may be displayed on different screens. In the dimension measuring device 10, since the visible light image camera 23 supported by the support member 10B captures the visible image, the image obtained by photographing the package OB from the upper surface side thereof is displayed on the output screen 40 However, an image obtained by photographing the package OB in other directions (obliquely upward, side surface, etc.) may be displayed. A plurality of visible images before and after the measurement may be captured at a predetermined interval in addition to capturing only one visible image. Furthermore, in addition to capturing a still image, moving images may be captured by the visible light image camera 23 and the moving images at the time of measurement may be displayed on the output screen 40.

In an output format using the printing device 30F, the same contents as the output screen 40 shown in Fig. 8 may be printed on a predetermined sheet to be output. In an output format by transmitting the data to the external device, for example, the package file, which includes the package measurement data and the image data associated with the package code, is transmitted to the package management server 16. The package management server 16 stores the package file transmitted from the data processing apparatus 12.

Any one of the above-described output formats may be used, or any combination thereof may be used. It is possible to adopt an output format other than the above-described output formats.

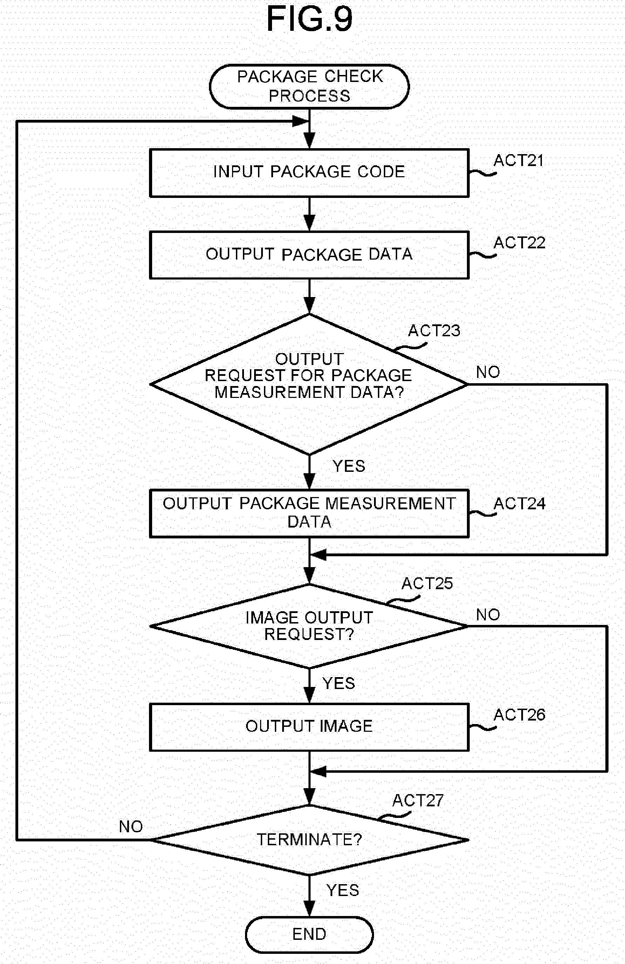

Next, a package check process according to the present embodiment is described with reference to a flowchart shown in Fig. 9.

In the above description, the processing at the time of the acceptance of delivery request for the package in the package reception system 1 is mainly described, but the measurement by the dimension measuring device 10 may be checked at any other time point. The package check process may be performed, for example, in the data processing apparatus 12, the package management server 16, or the electronic device 18.

Hereinafter, a case in which the package check process is executed by the data processing apparatus 12 is described. If the package code of the package to be checked is input by the input operation on the input device 30D (ACT 21), for example, the CPU 30A of the data processing apparatus 12 reads the package data associated with the package code from the package file (refer to Fig. 7) stored in the storage device 30C to output the package data (for example, displayed by the display device 30E) (ACT 22).

Furthermore, if a request for outputting the package measurement data is input (Yes in ACT 23), the CPU 30A reads the package measurement data associated with the package code input earlier from the package file stored in the storage device 30C to output it (ACT 24) . If a request for outputting an image at the time of measurement is input (Yes in ACT 25), the CPU 30A reads out the image data associated with the package code input earlier from the package file in the storage device 30C to output it (ACT 26). The package measurement data and image data may be output in the same output format as described above.

Thus, with the data processing apparatus 12, by inputting the package code of the registered package OB, the package measurement data and the image data associated with the package code can be confirmed. If the end of the process is not instructed (No in ACT 27) and the package code of another package is further input (ACT 21), the CPU 30A can output the package measurement data and the image data of another package in response to the output request in the same manner as described above (ACT 23 to ACT 26). If the end of the process is instructed (Yes in ACT 27), the CPU 30A ends the package check process.

In a case in which the electronic device 18 executes the package check, the electronic device 18 acquires the package code of the package to be checked by reading the package code and sends the output request together with the package code to the package management server 16 via the network 14. If the package management server 16 receives the output request together with the package code, the package management server 16 transmits the package measurement data and the image data (or either one of them) associated with the received package code to the electronic device 18 which is a request source.

Thereby, by using the electronic device 18 it is possible to confirm the package measurement data (the length, the width, and the height of the package) and the image data of the package OB at any position when an employee (a person in charge of package sorting, a person in charge of truck loading, a delivery person, etc.) in the delivery company. For example, even if the invoice attached on the package OB is peeled off or damaged during the transportation of the package OB, if the package code is known, the package OB can be confirmed by the package measurement data and the image data through the package check process.

Next, an example of a method of using the package measurement data stored by the dimension measuring device 10 according to the present embodiment is described. Here, a case in which the package measurement data is used for a package load check.

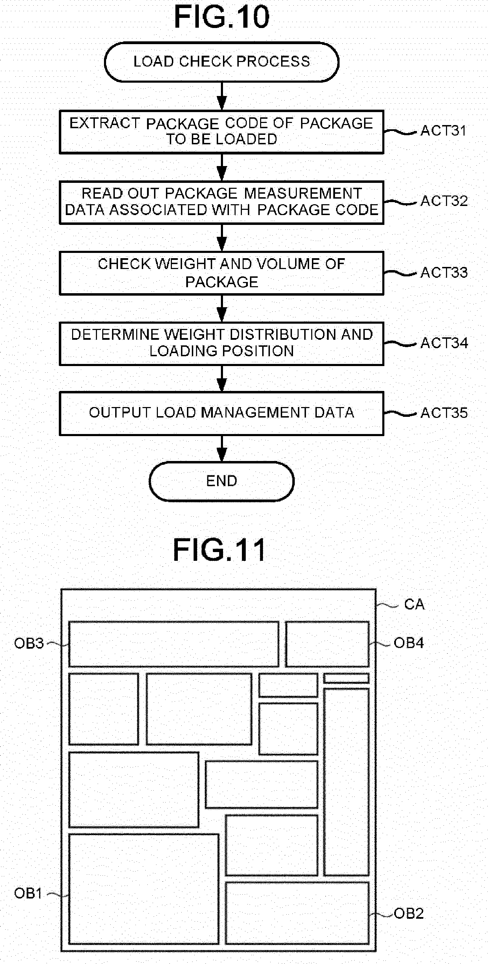

Fig. 10 is a flowchart for depicting the load check process according to the present embodiment. The load check process is carried out by the electronic device 18 (e.g., a personal computer, a server, etc.) installed at a place where it is necessary to load a plurality of the package on a truck or the like, such as a package reception station, a delivery office, a delivery center, or the like.

The electronic device 18 acquires the package codes of a plurality of the package to be loaded on the truck or the like (ACT 31), and reads out the package measurement data associated with each of the package codes from the package management server 16 (ACT 32). In other words, the electronic device 18 outputs an output request of the package measurement data associated with the plurality of package codes to the package management server 16. The package management server 16 transmits the package measurement data associated with each of the package codes received from the electronic device 18 to the electronic device 18.

The electronic device 18 checks the weight and calculates volume of the package based on the package measurement data corresponding to each package (ACT 33). The electronic device 18 checks whether the package to be loaded is within a predetermined allowable range of weight and volume for a loading space such as inside of a truck box or a cage truck. The electronic device 18 calculates the shape of the package based on the package measurement data of each package to determine whether the sum of the volumes of the package falls within the allowable range of the volume. In the same way, the electronic device 18 determines whether the sum of the weight of each package falls within the allowable range of the weight.

Next, the electronic device 18 determines the weight distribution and the loading position in the truck box or the cage truck for a plurality of the package that falls within the allowable range of the volume and weight (ACT 34).

Fig. 11 shows an example of a loaded state of a plurality of the package in a loading space CA. In accordance with a predetermined rule, the electronic device 18 determines the loading position of each package in the truck box or the cage truck based on the shape (the length, the width, and the height of the package) and the weight of the package indicated by the package measurement data.

For example, in Fig. 11, a package OB1, which is large and heavy, is arranged at the bottom. A heavy package OB2 is arranged at the bottom. A package OB3 which is large and light or a package OB4 which is small is arranged on the top. According to the combination of the shape and the weight of each package, the loading position of each package in a stable loading state is calculated.

The electronic device 18 outputs load management data indicating the loading position of each package to be loaded determined based on the package measurement data (ACT 35) . The load management data is provided to, for example, the person in charge of truck loading, a transportation system for sorting the package, a robot for loading the package on the truck, and the like.

In this way, it is possible to perform the load check using the package measurement data measured by the dimension measuring device 10. As a result, it is possible to greatly reduce the work burden on the employee of the delivery company while improving the working efficiency.

While certain embodiments have been described, these embodiments have been presented by way of example only, and are not intended to limit the scope of the invention. Indeed, the novel embodiments described herein may be embodied in a variety of other forms; furthermore, various omissions, substitutions and changes in the form of the embodiments described herein may be made without departing from the spirit of the invention. The accompanying claims and their equivalents are intended to cover such forms or modifications as would fall within the scope and spirit of the invention.

## Claims

1. A package management system, comprising:
a measurement device having a platform on which a package for measurement is to be placed, a camera positioned to capture an image of the package placed on the platform, a weight sensor configured to measure a weight of the package placed on the platform, and a processor configured to determine a length, a width, and a height of the package based on the captured image; and
an output device connected to a network and configured to output onto the network first information indicating the length, the width, and the height of the package and second information indicating the weight of the package.

2. The package management system according to claim 1, wherein the camera is a range image camera and the image captured is a range image.

3. The package management system according to claim 1 or 2, further comprising:
a visible light image camera positioned to capture another image to be printed or displayed, wherein
the measurement device further comprises an image storage module configured to store image data of said another image at a time the length, width, and height of the package are determined, and
the output device outputs onto the network the image data together with the first information and the second information.

4. The package management system according to claims 2 and 3, wherein the range camera and the visible light image camera are installed on a support that extends vertically away from the platform.

5. The package management system according to any of claims 1 to 4, further comprising:
an electronic device connected to the output device through the network, wherein
the electronic device is configured to receive the first information and the second information from the output device and display the first information and the second information.

6. The package management system according to any of claims 1 to 5, wherein
the output device is configured to store the first information and the second information in association with identification code unique to the package placed on the platform, and outputs the first information and the second information in association with the identification code.

7. The package management system according to any of claims 1 to 6, wherein the measurement device is configured to determine an identification code for the package and includes a printer configured to print an invoice, which is to be attached to the package and includes the identification code, preferably further comprising:
an electronic device connected to the output device through the network, wherein
the electronic device is configured to read the identification code from the invoice attached to the package and retrieve the first information and the second information associated with the identification code.

8. The package management system according to any of claims 1 to 7,
wherein the electronic device is configured to confirm that weight and volume of the package are in a predetermined allowable range,
Wherein preferably the electronic device is configured to confirm the weight and volume of a plurality of packages and determine a recommended stacking arrangement for the plurality of packages.

9. A method of managing packages, comprising:
placing a package on a platform of a measurement device;
capturing an image of the package placed on the platform;
measuring a weight of the package placed on the platform;
determining a length, a width, and a height of the package based on the captured image; and
outputting onto a network first information indicating the length, the width, and the height of the package and second information indicating the weight of the package.

10. The method according to claim 9, wherein the camera is a range image camera and the image captured is a range image.

11. The method according to claim 9 or 10, further comprising:
capturing another image to be printed or displayed, with a visible light image camera;
storing image data of said another image at a time the length, width, and height of the package are determined; and
outputting onto the network the image data together with the first information and the second information, wherein preferably the range camera and the visible light image camera are installed on a support that extends vertically away from the platform.

12. The method according to any of claims 9 to 11, further comprising:
receiving the first information and the second information that are output; and
displaying the first information and the second information.

13. The method according to any of claims 9 to 12, further comprising:
storing the first information and the second information in association with identification code unique to the package placed on the platform,
wherein the first information and the second information are output in association with the identification code.

14. The method according to claim 11, further comprising:
determining an identification code for the package;
printing an invoice that includes the identification code; and
attaching the invoice to the package, preferably further comprising:
reading the identification code from the invoice attached to the package; and
retrieving the first information and the second information associated with the identification code.

15. The method according to any of claims 9 to 14, further comprising:
confirming that weight and volume of the package are in a predetermined allowable range, preferably further comprising:
confirming the weight and volume of a plurality of packages; and
determining a recommended stacking arrangement for the plurality of packages.
